# EUROPEAN PATENT APPLICATION

(11) **EP 3 073 617 A1**
(43) Date of publication of application: **28.09.2016**
(21) Application number: 16157187.2
(22) Date of filing: 24.02.2016
(51) Int. Cl.: H02K 3/50, H02K 3/52

(54) **ELECTRICAL COLLECTING AND DISTRIBUTING RING AND ELECTRIC MOTOR**

(30) Priority: 23.03.2015 JP 2015059423
(71) Applicant: Hitachi Metals, Ltd., Tokyo 108-8224 (JP)
(72) Inventor: OKA, Taichi, Minato-ku, Tokyo 108-8224 (JP); EGAMI, Kenichi, Minato-ku, Tokyo 108-8224 (JP)
(74) Representative: Betten & Resch

(57) **Abstract**

An electrical collecting and distributing ring to perform electrical collection and distribution to polyphase windings is comprising a multiplicity of bus rings each comprising a conductive member having a circular cross section and being formed annularly. The bus rings each include respective multiple connecting portions to be connected to corresponding windings, and respective multiple circular arc portions, which are each interposed between the respective multiple connecting portions respectively. The connecting portions of the bus rings include their respective planar contact surfaces to be in contact with the windings respectively.

## Description

### BACKGROUND OF THE INVENTION

### 1. FIELD OF THE INVENTION

This invention relates to an electrical collecting and distributing ring to perform electrical collection and distribution to polyphase windings, and an electric motor with that electrical collecting and distributing ring.

### 2. DESCRIPTION OF THE RELATED ART

Conventionally, an electric motor is known that has polyphase windings wound around a multiplicity of core members respectively, and an electrical collecting and distributing ring to collect and distribute electric current to the polyphase windings.

### (See, for example Patent Document 1 below.)

The electrical collecting and distributing ring described in Patent Document **1** includes a multiplicity of annular bus rings in correspondence with each phase of the polyphase windings respectively. Each bus ring is comprising a metallic conductor, and an insulative sheath for covering the metallic conductor, and has a multiplicity of connecting portions formed by bending the metallic conductor.

Each of the connecting portions has one pair of extended portions, which extend radially inward, and a coupling portion, which couples between the one pair of extended portions, and the one pair of extended portions and the coupling portion form a U shape together. Between the one pair of extended portions is inserted a lead wire which is a part of the corresponding winding, and this lead wire is thermally caulked on the one pair of extended portions, so that the connecting portion and the lead wire are melted and joined together, allowing the bus ring and the corresponding winding to be electrically connected together.

[Patent Document 1] JP-A-2013-220005

### SUMMARY OF THE INVENTION

When the electric motor with the electrical collecting and distributing ring configured in the above described manner is used as, for example a vehicle driving source, high vibration resistance is required. For this reason, it is desirable to join large areas of the lead wires and the connecting portions respectively of the bus rings, to ensure connection strength therefor.

The electrical collecting and distributing ring disclosed by Patent Document **1** is formed with protrusions on opposite surfaces of the connecting portions of the bus rings to the lead wires respectively, so that those protrusions are joined to the lead wires respectively by thermal caulking. This configuration allows electric current for thermal caulking to concentrate and flow in narrow portions, and therefore has the advantage that welding is facilitated, but has a constraint on increasing the joining areas.

Accordingly, it is an object of the present invention to provide an electrical collecting and distributing ring and an electric motor capable of enhancing the connection strength between bus rings and windings.
(1) According to one embodiment of the invention, an electrical collecting and distributing ring to perform electrical collection and distribution to polyphase windings comprises
   a multiplicity of bus rings each comprising a conductive member having a circular cross section and being formed annularly, the bus rings each including respective multiple connecting portions to be connected to corresponding windings, and respective multiple circular arc portions, which are each interposed between the respective multiple connecting portions respectively, the connecting portions of the bus rings including their respective planar contact surfaces to be in contact with the windings respectively.
   In the one embodiment, the following modifications and changes may be made.
   (i) The connecting portions are formed in such a manner as to protrude from the multiple circular arc portions in radial directions, respectively, of the bus rings.
   (ii) The connecting portions are formed in such a manner as to protrude from the multiple circular arc portions outward in the radial directions respectively, and
      the contact surfaces are oriented outward in the radial directions, respectively, of the bus rings.
   (iii) The contact surfaces are being formed by partially plastically deforming the conductive members circular in cross section.
(**2**) According to another embodiment of the invention, an electric motor comprises:
   the electrical collecting and distributing ring according to (**1**) above;
   a stator including a multiplicity of core members made of a soft magnetic material, and the polyphase windings wound around the multiplicity of core members; and
   a rotor to be rotated relative to the stator by a magnetic force resulting from energization of the polyphase windings.

### Points of the invention

The electrical collecting and distributing ring and the electric motor according to the present invention allows for enhancing the connection strength between the bus rings and the windings.

### BRIEF DESCRIPTION OF THE DRAWINGS

The preferred embodiments according to the invention will be explained below referring to the drawings, wherein:
**FIG**. **1** is a schematic diagram showing a schematic configuration example of an electric motor in the present embodiment;
**FIG**. **2** is a perspective view showing an electrical collecting and distributing ring;
**FIG**. **3A** is a plan view showing a configuration example of the electrical collecting and distributing ring;
**FIG. 3B** is a front view showing the configuration example of the electrical collecting and distributing ring;
**FIG 4** is an enlarged perspective view showing a connecting portion of a bus ring;
**FIG. 5A** is a plan view showing a configuration example of the connecting portion;
**FIG. 5B** is a front view showing the configuration example of the connecting portion; and
**FIG. 5C** is a cross sectional view taken along A-A line in FIG 5B.

### DETAILED DESCRIPTION OF THE PREFERRED EMBODIMENTS

### [Embodiment]

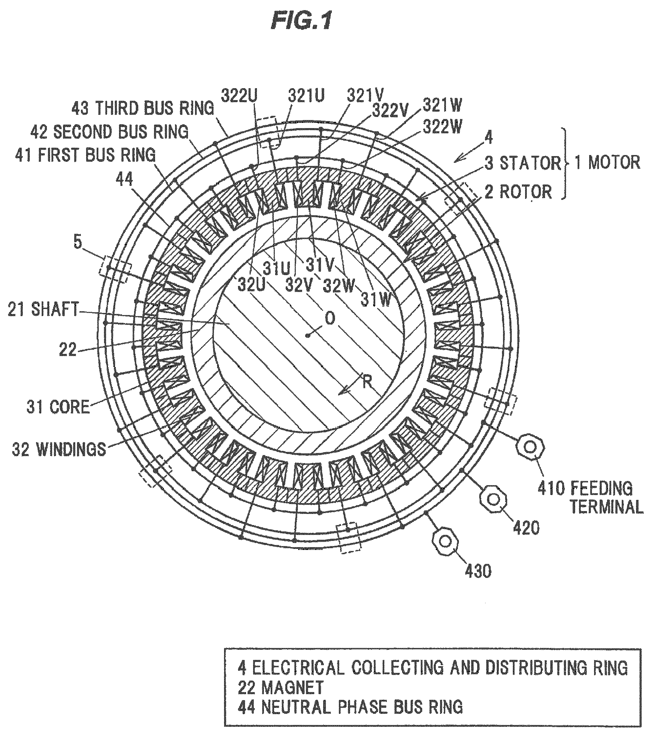

Below is described an embodiment of an electrical collecting and distributing ring and an electric motor according to the present invention, with reference to **FIGS.1** to **5A** to **5C.**

**FIG. 1** is a schematic diagram showing a schematic configuration example of an electric motor **1** in the embodiment according to the present invention.

This electric motor **1** is used as, for example, a driving source for a vehicle such as an electric automobile, and is comprising a rotor **2**, which is a rotating part, a stator **3**, which is a stationary part, and an electrical collecting and distributing ring **4** including first, second, third bus rings **41, 42, 43**, and a neutral phase bus ring **44.**

The rotor **2** includes a shaft **21**, which is pivotably supported coaxially with the stator **3** by an unillustrated bearing, and a cylindrical magnet **22**, which is fixed to an outer circumferential surface of the shaft **21** and which is circumferentially alternately magnetized with N poles and S poles.

The stator **3** includes a multiplicity of core members **31** made of a soft magnetic material, which are arranged annularly, and windings **32**, which are wound around outer peripheries of the core members **31**.

In this embodiment, the twenty four core members **31** are disposed annularly around a rotational axis O of the shaft **21** as shown in **FIG 1**. These twenty four core members **31** are comprising eight U phase core members **31U**, eight V phase core members **31V**, and eight W phase core members **31W** in the following manner. In the rotational direction R of the rotor **2** as shown in **FIG. 1**, adjacent to the U phase core members **31U** are arranged the V phase core members **31V** respectively, adjacent to the V phase core members **31V** are arranged the **W** phase core members **31W** respectively, and adjacent to the W phase core members **31W** are arranged the U phase core members **31U** respectively. Note that although in the present embodiment, the annularly arranged multiple (twenty four) core members **31** are used, it is also possible to use, as an alternative form, an annular body comprising the multiplicity of core members **31** formed integrally with each other.

The U phase core members **31U** are wound with U phase windings **32U** therearound as the windings **32**, and electrical collection and distribution to the U phase windings **32U** is performed by a first bus ring **41**. The V phase core members **31V** are wound with V phase windings **32V** therearound as the windings **32**, and electrical collection and distribution to the V phase windings **32V** is performed by a second bus ring **42**. The W phase core members **31W** are wound with W phase windings **32W** therearound as the windings **32**, and electrical collection and distribution to the W phase windings **32W** is performed by a third bus ring **43**.

Respective one ends of the U phase windings **32U** are configured as first lead wires **321U**, while the respective other ends of the U phase windings **32U** are configured as second lead wires **322U**. Likewise, respective one ends of the V phase windings **32V** are configured as first lead wires **321V**, while the respective other ends of the V phase windings **32V** are configured as second lead wires **322V**. Also, respective one ends of the W phase windings **32W** are configured as first lead wires **321W**, while the respective other ends of the W phase windings **32W** are configured as second lead wires **322W**.

The first, second, third bus rings **41, 42, 43**, and the neutral phase bus ring **44** of the electrical collecting and distributing ring **4** are held in a multiplicity of holding members **5.** The first bus ring **41** is electrically connected to the first lead wires **321U** of the U phase windings **32**U. The second bus ring **42** is electrically connected to the first lead wires **321V** of the V phase windings **32V.** The third bus ring **43** is electrically connected to the first lead wires **321W** of the W phase windings **32**W.

The neutral phase bus ring **44** is electrically connected to the second lead wires **322**U of the U phase windings **32**U, the second lead wires **322V** of the **V** phase windings **32**V, and the second lead wires **322W** of the W phase windings **32W.**

The first, second, and third bus rings **41, 42**, and **43** are formed with feeding portions **410, 420**, and **430** respectively, so that the first, second, and third bus rings **41, 42**, and **43** are provided with sinusoidal driving currents, respectively, each being **120** degrees out of phase from the others, from an inverter not shown, through those feeding portions **410, 420**, and **430**. The driving currents produce a rotating magnetic field in the stator 3. The magnet **22** is acted on by a rotational force resulting from attractive and repulsive forces caused by the rotating magnetic field, and this rotational force results in a rotation of the shaft **21** about the rotational axis O. In other words, the rotor **2** is rotated relative to the stator **3** by the magnetic force resulting from energization of the U phase windings **32U**, the **V** phase windings **32V**, and the W phase windings **32**W.

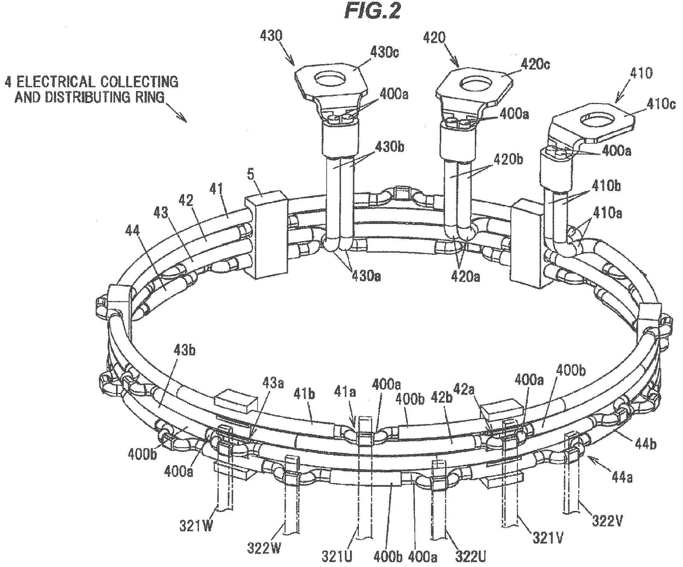

**FIG. 2** is a perspective view showing the electrical collecting and distributing ring **4**. Note that in the following description, the direction parallel to the rotational axis 0 of the shaft **21** is referred to simply as the axial direction. In **FIG. 2**, some of the first and second lead wires **321**U, **321**V, **321**W, **322**U, **322**V, and **322**W are indicated by an alternate long and two short dashes line.

As shown in **FIG. 2**, the first, second, third bus rings **41, 42, 43**, and the neutral phase bus ring **44** are arranged on top of each other in the axial direction, and are fixed to each other by the multiplicity of holding members **5** made of a molded resin.

The first bus ring **41** includes multiple (in this embodiment four) connecting portions **41a**, which are connected to the first lead wires **321**U, respectively, of the U phase windings **32**U drawn in the axial direction, and multiple (in this embodiment four) circular arc portions **41**b, which are each interposed between the multiple connecting portions **41**a, respectively. For the first bus ring **41**, the multiple connecting portions **41**a are formed in such a manner as to protrude from the multiple circular arc portions **41**b in radial directions of the multiple circular arc portions **41**b, respectively.

Similarly, the second bus ring **42** includes multiple (in this embodiment four) connecting portions **42**a, which are connected to the first lead wires **321**V, respectively, of the V phase windings **32**V drawn in the axial direction, and multiple (in this embodiment four) circular arc portions **42**b, which are each interposed between the multiple connecting portions **42**a, respectively. For the second bus ring **42**, the multiple connecting portions **42**a are formed in such a manner as to protrude from the multiple circular arc portions **42**b in radial directions of the multiple circular arc portions **42**b, respectively.

Also, similarly, the third bus ring **43** includes multiple (in this embodiment four) connecting portions **43**a, which are connected to the first lead wires **321**W, respectively, of the U phase windings **32**W drawn in the axial direction, and multiple (in this embodiment four) circular arc portions **43**b, which are each interposed between the multiple connecting portions **43**a, respectively. For the third bus ring **43**, the multiple connecting portions **43**a are formed in such a manner as to protrude from the multiple circular arc portions **43**b in radial directions of the multiple circular arc portions **43**b, respectively.

The neutral phase bus ring **44** includes multiple (in this embodiment twelve) connecting portions **44**a, which are connected to the second lead wires **322**U, **322**V, and **322**W, respectively, of the U phase windings **32**U, the V phase windings **32**V, and the W phase windings **32**W drawn in the axial direction, and multiple (in this embodiment twelve) circular arc portions **44**b, which are each interposed between the multiple connecting portions **44**a, respectively. For the neutral phase bus ring **44**, the multiple connecting portions **44**a are formed in such a manner as to protrude from the multiple circular arc portions **44**b in radial directions of the multiple circular arc portions **44**b, respectively.

In this embodiment, the multiple connecting portions **41**a of the first bus ring **41** are formed in such a manner as to protrude from the multiple circular arc portions **41**b outward in the radial directions of the multiple circular arc portions **41**b respectively, the multiple connecting portions **42**a of the second bus ring **42** are formed in such a manner as to protrude outward in the radial directions of the multiple circular arc portions **42**b, and the multiple connecting portions **43**a of the third bus ring **43** are formed in such a manner as to protrude from the multiple circular arc portions **43**b outward in the radial directions of the multiple circular arc portions **43**b respectively. In addition, as with the first, second, and third bus rings **41**, **42**, and **43**, the neutral phase bus ring **44** is also formed in such a manner that the multiple connecting portions **44**a are protruded from the multiple circular arc portions **44**b outward in the radial directions of the multiple circular arc portions **44**b respectively.

The first, second, third bus rings **41**, **42**, **43**, and the neutral phase bus ring **44** are each produced by annularly forming a linear conductive member with a central conductor **400**a having a circular cross section, being made of a highly conductive metal such as copper, and being covered with an insulator **400**b made of a resin. For this reason, the multiple circular arc portions **41**b, **42**b, **43**b, and **44**b of the first, second, third bus rings **41**, **42**, **43**, and the neutral phase bus ring **44** are circular in the cross section of each of their respective central conductors **400**a. On the other hand, the respective central conductors **400**a of the connecting portions **41**a, **42**a, **43**a, and **44**a of the first, second, third bus rings **41**, **42**, **43**, and the neutral phase bus ring **44** are partially plastically deformed to have a flat surface.

The respective insulators **400**b of the connecting portions **41**a, **42**a, **43**a, and **44**a of the first, second, third bus rings **41**, **42**, **43**, and the neutral phase bus ring **44** are removed in such a manner that the connecting portions **41**a, **42**a, **43**a, and **44**a are formed at bus ring portions where their respective central conductors **400**a each made of a solid wire are exposed. The configuration of these connecting portions **41**a, **42**a, **43**a, and **44**a will be described in detail later.

The feeding portion **410** of the first bus ring **41** includes one pair of extended portions **410**a, which extend inward in a radial direction of the first bus ring **41**, one pair of rising portions **410**b, which are formed in such a manner as to rise in the axial direction from tips of the one pair of extended portions **410**a, and a feeding terminal **410**c, which is connected by crimping or swaging to the central conductors **400**a exposed from the insulators **400**b of the one pair of rising portions **410**b.

Similarly, the feeding portion **420** of the second bus ring **42** includes one pair of extended portions **420**a, which extend inward in a radial direction of the second bus ring **42**, one pair of rising portions **420**b, which are formed in such a manner as to rise in the axial direction from tips of the one pair of extended portions **420**a, and a feeding terminal **420**c, which is connected to the central conductors **400**a of the one pair of rising portions **420**b.

Also, similarly, the feeding portion **430** of the third bus ring **43** includes one pair of extended portions **430**a, which extend inward in a radial direction of the third bus ring **43**, one pair of rising portions **430**b, which are formed in such a manner as to rise in the axial direction from tips of the one pair of extended portions **430**a, and a feeding terminal **430**c, which is connected to the central conductors **400**a of the one pair of rising portions **430**b.

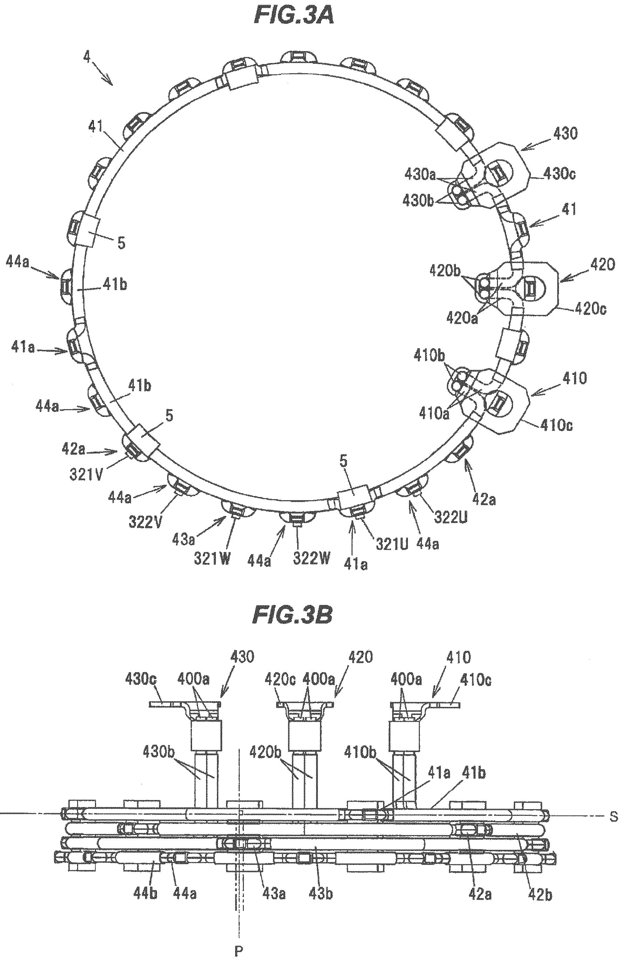

**FIG**. **3**A is a plan view showing a configuration example of the electrical collecting and distributing ring **4**, and **FIG. 3**B is a side view showing the electrical collecting and distributing ring **4**. In **FIGS. 3**A and **3**B, as in **FIG. 2**, some of the first and second lead wires **321**U, **321**V, **321**W, **322**U, **322**V, and **322**W are indicated by an alternate long and two short dashes line.

As shown in **FIG. 3**A, the electrical collecting and distributing ring **4** is configured in such a manner that when the first, second, third bus rings **41**, **42**, **43**, and the neutral phase bus ring **44** are arranged on top of each other in the axial direction, their respective multiple connecting portions **41**a, connecting portions **42**a, connecting portions **43**a, and connecting portions **44**a are not overlapping in the axial direction, and are arranged at each equal pitch in a circumferential direction of the electrical collecting and distributing ring 4. Note that the term "each equal pitch" refers to pitches which may not completely be equal, but which may differ by on the order of 0.1 mm to 2.0 mm, for example.

In addition, the connecting portions **41**a of the first bus ring **41** are each located between two adjacent connecting portions **44**a in the circumferential direction of the electrical collecting and distributing ring 4. Similarly, the connecting portions **42**a of the second bus ring **42** are each located between two adjacent connecting portions **44**a in the circumferential direction of the electrical collecting and distributing ring 4. Similarly, the connecting portions **43**a of the third bus ring **43** are each located between two adjacent connecting portions **44**a in the circumferential direction of the electrical collecting and distributing ring **4**.

The one pair of rising portions **410**b of the feeding portion **410** of the first bus ring **41** are disposed on an inner side in a radial direction of the first bus ring **41**. Similarly, the one pair of rising portions **420**b of the feeding portion **420** of the second bus ring **42** are arranged on an inner side in a radial direction of the second bus ring **42**. Similarly, the one pair of rising portions **430**b of the feeding portion **430** of the third bus ring **43** are arranged on an inner side in a radial direction of the first bus ring **43**.

As shown in **FIG**. **3**B, a drawing direction P (indicated by an alternate long and two short dashes line in **FIG. 3**B) of the first and second lead wires **321**U, **321**V, **321**W, **322**U, **322**V, and **322**W of the windings **32** (**32**U / **32**V / **32**W) is at right angles to a virtual plane S (indicated by an alternate long and short dash line in **FIG. 3**B), which is a plane including the first bus ring **41**. In other words, the first and second lead wires **321**U, **321**V, **321**W, **322**U, **322**V, and **322**W of the windings **32** (**32**U / **32**V / **32**W) are drawn out in a direction perpendicular to the plane including the first bus ring **41**.

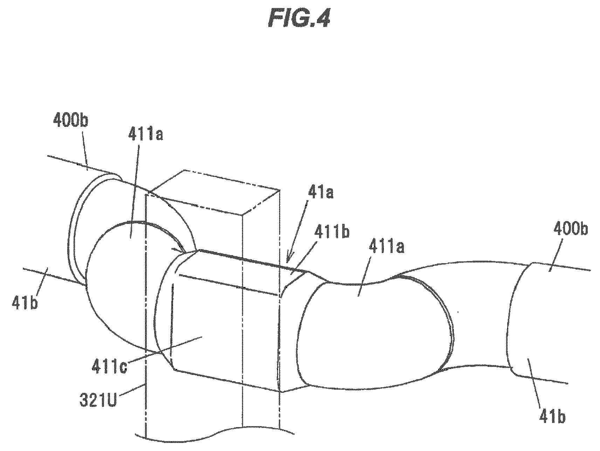

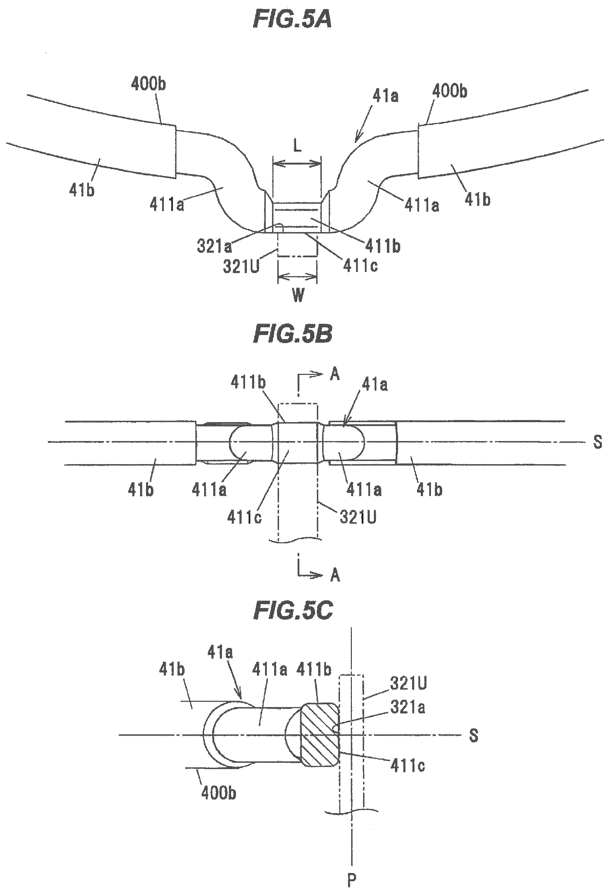

Next, configurations of the connecting portions **41**a, **42**a, and **43**a of the first, second, and third bus rings **41**, **42**, and **43** and the connecting portions **44**a of the neutral phase bus ring **44** shown in **FIGS. 1** and **2** are described. It should be noted, however, that, because these connecting portions **41**a, **42**a, **43**a, and **44**a are identical in shape, the connecting portion **41**a of the first bus ring **41** is taken for example and described with reference to **FIGS. 4** and **5**A to **5**C.

**FIG. 4** is a perspective view showing the enlarged connecting portion **41**a of the first bus ring **41**. This connecting portion **41**a is configured in such a manner as to include one pair of extended portions **411**a, which extend from the circular arc portions **41**b outward in a radial direction of the first bus ring **41**, and a middle portion **411**b, which is forrned at right angles to the radial direction between tips of the one pair of extended portions **411**a. The middle portion **411**b is joined by welding to the first lead wire **321**U. This welding can be performed specifically by TIG (Tungsten Inert Gas) welding or heat caulking or soldering.

An opposite surface of the middle portion **411**b to the first lead wires **321**U is formed with a planar contact surface **411**c to be in contact with the first lead wire **321**U during welding. The contact surface **411**c is oriented outward in the radial direction of the first bus ring **41**. In other words, the normal to the contact surface **411**c faces outward in the radial direction of the first bus ring **41**. Note that although in this embodiment, the first lead wire **321**U is in a rectangular shape when viewed in the axial direction, the shape of the first lead wire **321**U is not limited thereto, but may be circular, for example.

The contact surface **411**c is formed in a flat shape by, for example, sandwiching the central conductor **400**a circular in cross section between one pair of flat plate-shaped dies, and pressing that central conductor **400**a in the radial direction of the first bus ring **41** with that one pair of dies. In other words, the contact surface **411**c is formed by partially plastically deforming the central conductor **400**a which is the conductive member circular in cross section.

As shown in **FIG. 5**A, the middle portion **411**b is located on the outer side in the radial direction of the first bus ring **41** relative to the circular arc portions **41**b. Here, a length L of the middle portion **411**b (i.e. a distance between the tips of the one pair of extended portions **411**a) is the same dimension as or greater than a width W (L ≧ W) of the opposite surface **321**a of the first lead wires **321**U.

Also, as shown in **FIG. 5B**, the connecting portion **41**a is formed on the virtual plane S including the first bus ring **41**, and the one pair of extended portions **411**a and the middle portion **411**b are the same in location in the axial direction.

Furthermore, as shown in **FIG. 5**C, the contact surface **411**c is substantially rectangular in cross section when viewed in the circumferential direction of the first bus ring **41**, and is formed perpendicular to the virtual plane S including the first bus ring **41**.

The first lead wire **321**U is drawn in such a manner that its drawing direction is perpendicular to the virtual surface S, and the opposite surface **321**a facing the connecting portion **41**a of the first lead wire **321**U is brought into surface contact with the surface contact **411**c. Note that the connecting portion **41**a and the first lead wire **321**U are connected together by, for example a welding means such as TIG welding or the like for the contact surface **411**c and the opposite surface **321**a of the first lead wire **321**U.

### (Functions and advantageous effects of the embodiment)

The above described embodiment has the following functions and advantageous effects.
(**1**) Since the connecting portion **41**a has its planar contact surface **411**c to be connected to the first lead wire **321**U, the joining area between it and the first lead wire **321**U increases, in comparison to when the contact surface **411**c is curved. This allows enhancement in the connection strength for the first bus ring **41** and the windings 32U. The same is true of the second bus ring **42**, the third bus ring **43**, and the neutral phase bus ring **44**.
(**2**) Since the connecting portions **41**a, **42**a, **43**a, and **44**a of the first, second, third bus rings **41**, **42**, **43**, and the neutral phase bus ring **44** are formed in such a manner as to protrude from the circular arc portions **41**b, **42**b, **43**b, and **44**b in the radial directions of the circular arc portions **41**b, **42**b, **43**b, and **44**b, it is possible to avoid interference between the first and second lead wires **321**U, **321**V, **321**W, **322**U, **322**V, and **322**W to be connected to the connecting portions **41**a, **42**a, **43**a, and **44**a, and the circular arc portions **41**b, **42**b, **43**b, and **44**b, and therefore facilitate connections between the connecting portions **41**a, **42**a, **43**a, and **44**a and the first and second lead wires **321**U, **321**V, **321**W, **322**U, **322**V, and **322**W
(**3**) In addition, in the present embodiment, since the connecting portions **41**a, **42**a, **43**a, and **44**a are protruded from the circular arc portions **41**b, **42**b, **43**b, and **44**b outward in the radial directions of the circular arc portions **41**b, **42**b, **43**b, and **44**b, and have their respective planar contact surfaces to be in contact with the first and second lead wires **321**U, **321**V, **321**W, **322**U, **322**V, and **322**W, it is possible to sufficiently ensure a space for welding, and therefore further facilitate connections therebetween.

### (Summary of the embodiment)

Next, the technical concept that is ascertained from the embodiment described above will be described with the aid of reference characters and the like in the embodiment. It should be noted, however, that each of the reference characters in the following description should not be construed as limiting the constituent elements in the claims to the members and the like specifically shown in the embodiment.
[**1**] An electrical collecting and distributing ring (**4**) to perform electrical collection and distribution to polyphase windings (**32**U, **32**V, and **32**W), comprising
   a multiplicity of bus rings (**41**, **42**, **43**, and **44**) each comprising a conductive member having a circular cross section and being formed annularly, the bus rings (**41**, **42**, **43**, and **44**) each including respective multiple connecting portions (**41**a, **42**a, **43**a, and **44**a) to be connected to corresponding windings (**32**U, **32**V, and **32**W), and respective multiple circular arc portions (**41**b, **42**b, **43**b, and **44**b), which are each interposed between the respective multiple connecting portions (**41**a, **42**a, **43**a, and **44**a) respectively, the connecting portions (**41**a, **42**a, **43**a, and **44**a) of the bus rings (**41**, **42**, **43**, and **44**) including their respective planar contact surfaces (**411**c) to be in contact with the windings (**32**U, **32**V, and **32**W) respectively.
[**2**] The electrical collecting and distributing ring (**4**) according to [**1**] above, wherein
   the connecting portions (**41**a, **42**a, **43**a, and **44**a) are formed in such a manner as to protrude from the multiple circular arc portions (**41**b, **42**b, **43**b, and **44**b) in radial directions, respectively, of the bus rings (**41**, **42**, **43**, and **44**).
[**3**] The electrical collecting and distributing ring (**4**) according to [**2**] above, wherein
   the connecting portions (**41**a, **42**a, **43**a, and **44**a) are formed in such a manner as to protrude from the multiple circular arc portions (**41**b, **42**b, **43**b, and **44**b) outward in the radial directions respectively, and
   the contact surfaces (**411**c) are oriented outward in the radial directions, respectively, of the bus rings (**41**, **42**, **43**, and **44**).
[**4**] The electrical collecting and distributing ring (**4**) according to any one of [**1**] to [**3**] above, wherein
   the contact surfaces (**411**c) are being formed by partially plastically deforming the conductive members circular in cross section.
[**5**] An electric motor (**1**), comprising:
   the electrical collecting and distributing ring (**4**) according to any one of [**1**] to [**4**] above;
   a stator (**3**) including a multiplicity of core members (**31**) made of a soft magnetic material, and the polyphase windings (**32**U, **32**V, and **32**W) wound around the multiplicity of core members (**31**); and
   a rotor (**2**) to be rotated relative to the stator (**3**) by a magnetic force resulting from energization of the polyphase windings (**32**U, **32**V, and **32**W).

Although the embodiment of the present invention has been described above, the embodiment described above should not be construed to limit the invention in the appended claims. It should also be noted that not all the combinations of the features described in the above embodiment are essential to the means for solving the problems of the invention.

The present invention may be appropriately modified and practiced without departing from the spirit and scope thereof. For example, although in the above embodiment the central conductors **400**a of the first, second, and third bus rings **41**, **42**, and **43** are covered with the insulators **400**b at the circular arc portions **41**b, **42**b, and **43**b thereof, the central conductors **400**a of the first, second, and third bus rings **41**, **42**, and **43** may instead be solid wire conductors not covered by the insulators **400**b.

Although in the above embodiment, the multiple connecting portions **41**a, **42**a, **43**a, and **44**a of the first, second, third bus rings **41**, **42**, **43**, and the neutral phase bus ring **44** are protruded outward in the radial directions, respectively, of the circular arc portions **41**b, **42**b, **43**b, and **44**b, all the multiple connecting portions **41**a, **42**a, **43**a, and **44**a may instead be protruded inward in the radial directions, respectively, of the circular arc portions **41**b, **42**b, **43**b, and **44**b.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

## Claims

1. An electrical collecting and distributing ring to perform electrical collection and distribution to polyphase windings, comprising
a multiplicity of bus rings each comprising a conductive member having a circular cross section and being formed annularly, the bus rings each including respective multiple connecting portions to be connected to corresponding windings, and respective multiple circular arc portions, which are each interposed between the respective multiple connecting portions respectively, the connecting portions of the bus rings including their respective planar contact surfaces to be in contact with the windings respectively.

2. The electrical collecting and distributing ring according to claim 1, wherein the connecting portions are formed in such a manner as to protrude from the multiple circular arc portions in radial directions, respectively, of the bus rings.

3. The electrical collecting and distributing ring according to any of the preceding claims, wherein the connecting portions are formed in such a manner as to protrude from the multiple circular arc portions outward in the radial directions respectively, and
the contact surfaces are oriented outward in the radial directions, respectively, of the bus rings.

4. The electrical collecting and distributing ring according to any of the preceding claims, wherein the contact surfaces are being formed by partially plastically deforming the conductive members circular in cross section.

5. An electric motor, comprising:
the electrical collecting and distributing ring according to any of the preceding claims;
a stator including a multiplicity of core members made of a soft magnetic material, and the polyphase windings wound around the multiplicity of core members; and
a rotor to be rotated relative to the stator by a magnetic force resulting from energization of the polyphase windings.
